# FASCICULE DE BREVET EUROPEEN

(11) **EP 0 474 556 B1**
(45) Date de publication et mention de la délivrance du brevet: **25.01.1995**
(21) Numéro de dépôt: 91402366.8
(22) Date de dépôt: 04.09.1991
(51) Int. Cl.: B64G 1/24, B64G 1/26

(54) **Procédé de pilotage d'un engin spatial doté d'un mouvement de précession et dispositif pour sa mise en oeuvre**
Verfahren der Steuerung eines Raumfahrzeuges, welche eine Präzessionsbewegung ausführt und Vorrichtung um diese zu betätigen
Method of guiding a precessing spacecraft and device for carrying out such a method

(30) Priorité: 06.09.1990 FR 9011072
(43) Date de publication de la demande: 11.03.1992
(73) Titulaire: AEROSPATIALE Société Nationale Industrielle, 75781 Paris Cédex 16 (FR)
(72) Inventeur: Fantar, Fahem, F-78500 Sartrouville (FR)
(74) Mandataire: Dubois-Chabert, Guy

(56) Documents cités:
- EP-A- 0 225 683
- US-A- 3 652 042
- US-A- 3 866 025
- ASTRONAUTICS AND AERONAUTICS vol. 6, no. 5, Mai 1968, NEW YORK (USA) pages 54-62; D.F. ADAMSKI: 'ORBITAL SHUTTLE'

## Description

La présente invention concerne un procédé de pilotage d'un engin spatial doté d'un mouvement de précession et un dispositif pour sa mise en oeuvre. Elle s'applique notamment à la mise en position de l'étage supérieur d'un lanceur avant le largage des charges utiles (satellites).

La mise en position de l'étage supérieur d'un lanceur avant le largage des charges utiles constitue un problème crucial des missions spatiales puisqu'elle conditionne le bon déroulement de la mise en orbite de ces charges.

Un mouvement de précession rapide (cinq tours par minute ou plus) permet une bonne stabilisation gyroscopique d'une charge utile lors de son parcours entre son orbite de largage et son orbite de fonctionnement. On comprend que pendant ce parcours, une charge larguée sans mouvement de précession, et possédant ne serait-ce qu'une faible vitesse transverse, va dévier de sa direction nominale. Cette déviation doit être rattrapée par une mise en action des tuyères et entraîne une dépense importante d'énergie, ce qui diminue la durée de vie du satellite, intimement liée à ses réserves de carburant.

L'application d'une vitesse transverse parasite à une charge utile dotée d'un mouvement de précession ne modifie pas son orientation générale ; la charge ne possède qu'un mouvement de rotation suivant un cône dirigé autour de l'axe d'orientation générale.

Donc, il suffit qu'au largarge de la charge utile, cet axe d'orientation soit voisin de la direction nominale pour conserver cette précision pendant tout le transfert d'orbite et ceci sans utiliser un contrôle actif par mise en oeuvre des tuyères. On économise ainsi une importante quantité d'énergie.

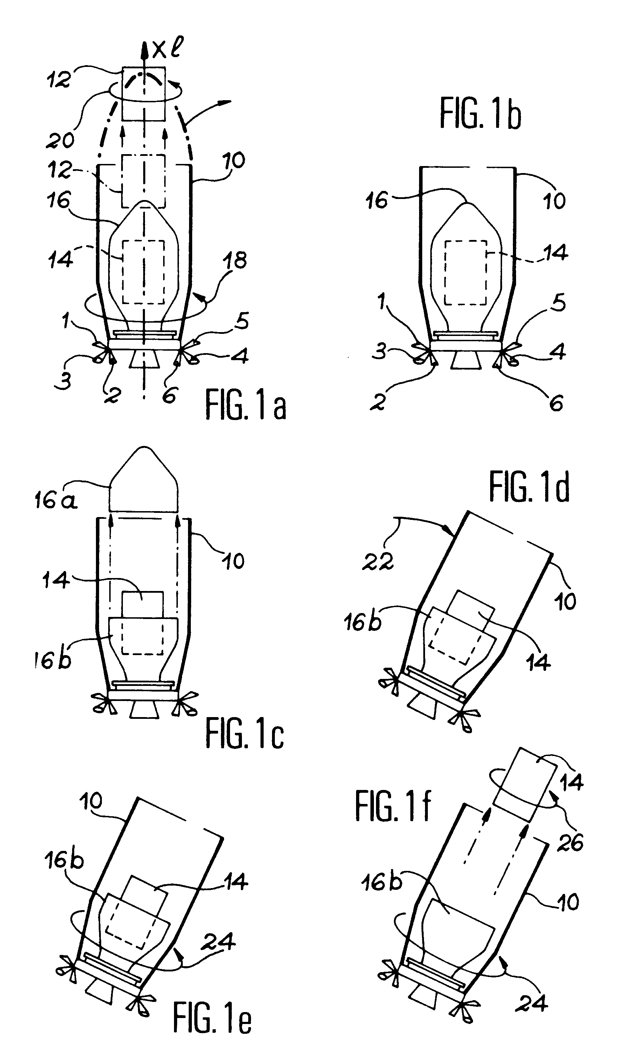

Les figures 1a à 1f représentent une suite connue d'opérations pour les largages successifs de deux charges utiles.

Sur la figure 1a, on voit l'étage supérieur 10 du lanceur et deux charges utiles 12, 14.

La charge 12 vient d'être larguée et s'éloigne de l'étage 10. La charge 14 est encore contenue dans la structure 16 de type Spelda ou Sylda qui la protège.

Les flèches référencées 18 et 20 indiquent les mouvements de précession de l'étage supérieur 10 et de la charge utile 12 autour de l'axe longitudinal Xℓ.

Après le largage de la première charge 12, lors d'une seconde étape, représentée figure 1b, on stoppe le mouvement de précession de l'étage supérieur 10.

Lors de l'étape suivante, représentée figure 1c, la partie supérieure 16a de la Spelda est éjectée, mettant à jour la seconde charge utile 14 contenue dans la partie inférieure 16b de la Spelda.

L'étage supérieur 10 est ensuite basculé dans la position de largage de la seconde charge utile 14. Cette opération est représentée sur la figure 1d, où la flèche 22 symbolise le basculement.

La figure 1e représente la mise en précession de l'étage supérieur 10 symbolisée par la flèche 24.

La figure 1f représente schématiquement la libération de la seconde charge utile 14 animée d'un mouvement de précession symbolisé par la flèche 26.

Sur les figures 1a à 1f, on peut voir six tuyères référencées de 1 à 6 et réparties en deux jeux de trois tuyères positionnées sur l'étage 10 de manière à fournir les moments de rotation dans le plan de tangage-lacet (pour obtenir les mouvements de précession) et ceux nécessaires aux basculements.

De manière usuelle, le positionnement de l'étage 10 est effectué alors que celui-ci est stabilisé (sans mouvement de précession). On leur impose ensuite le mouvement de précession. Aucun contrôle sur l'orientation de l'axe longitudinal Xℓ de l'étage supérieur 10 n'est effectué après sa mise en précession. La direction de cet axe Xℓ lors du largage de la charge utile peut alors être entachée d'erreur à cause, entre autres, du balourd dynamique de l'ensemble formé par le lanceur et la charge utile ou de défauts d'implantation des tuyères. Cette erreur doit ensuite être rattrapée, ce qui implique des dépenses énergétiques défavorables à la longévité de la charge. Ce type de largage est usuellement qualifié de largage spinné en boucle ouverte.

Une demande de brevet européen EP-A-0 225 683 décrit une méthode de aise en mouvement de rotation d'un satellite autour de son axe longitudinal. Les moyens qui permettent de mettre en rotation le satellite autour du "roll axis" fonctionnent en boucle ouverte.

Un brevet US-A-3 866 025 décrit un système qui permet de contrôler des satellites stabilisés trois axes, c'est-à-dire d'avoir des composantes de vitesse angulaire r, p, q, faibles. Les couples gyroscopiques sont du second ordre et peuvent par conséquent être négligés.

Le procédé de pilotage conforme à l'invention permet l'orientation d'un engin spatial, et en particulier un étage supérieur de lanceur contenant une ou plusieurs charges utiles, alors que celui-ci est doté d'un mouvement de précession autour de son axe longitudinal. Pour cela, l'invention préconise l'utilisation des couples gyroscopiques engendrés par le mouvement de précession pour diriger l'axe longitudinal de l'engin spatial, le pilotage étant basé sur des commandes de vitesses asservies sur l'écart entre une position angulaire à atteindre et la position de l'engin au cours du temps. Ce type de pilotage repose sur une série de mesures de la vitesse angulaire dans un repère attaché au lanceur et de la position angulaire de l'engin dans un repère absolu (inertiel). La position de largage, déterminée préalablement, est atteinte par une actualisation de la vitesse angulaire. Par opposition au largage spinné en boucle ouverte, ce type de largage peut être qualifié de largage spinné en boucle fermée.

Il est connu que pour un bon contrôle de l'axe de précession, il est nécessaire que les couples gyroscopiques soient inférieurs ou égaux à environ 30 % des couples moteurs. Cette condition ressentie dans l'art antérieur comme une forte contrainte qui empêchait toute modification d'orientation après la mise en précession, ne gêne en rien un pilotage basé sur l'utilisation des couples gyroscopiques.

D'autre part, le procédé conforme à l'invention ne nécessite pas un bit d'impulsion minimum (MIB) très fin à l'opposé d'un largage spinné en boucle ouverte. Le bit d'impulsion minimum est un paramètre caractéristique d'une tuyère. Il spécifie le temps minimum d'ouverture de la tuyère pour obtenir une puissance donnée.

Pour un largage en boucle ouverte, le MIB doit être faible car un positionnement très précis et une vitesse de basculement faible de l'axe longitudinal de l'engin spatial sont nécessaires avant la mise en précession. Par contre, lorsque la position de l'étage supérieur est contrôlée pendant le mouvement de précession, le MIB n'a plus a être aussi faible, ce qui simplifie la réalisation et les réglages des jeux de tuyères mis en oeuvre.

Enfin, le procédé conforme à l'invention permet de fusionner en une seule, les opérations de basculement et de mise en précession représentées sur les figures 1d et 1c. Une économie substantielle de temps et d'énergie est ainsi réalisée.

De façon plus précise, la présente invention concerne un procédé de pilotage d'un engin spatial doté d'un mouvement de précession autour de son axe longitudinal, l'engin étant muni de moyens de déplacement et le pilotage étant effectué pas à pas.

Pour amener l'axe longitudinal de l'engin d'une orientation initiale à une autre orientation prédéfinie à atteindre, ces orientations étant repérées par rapport à un repère inertiel de référence, à chaque pas de pilotage, sans arrêter le spin, en présence de couples gyroscopiques, de balourd dynamique et de couples perturbateurs, l'engin est doté d'une vitesse angulaire asservie sur l'écart entre l'orientation de l'axe longitudinal à atteindre et l'orientation de l'engin à la fin du pas de pilotage précédent et dépendant de la vitesse de l'engin au pas de pilotage précédent
La présente invention concerne aussi un dispositif pour la mise en oeuvre du procédé.

Les caractéristiques et avantages de l'invention apparaîtront mieux après la description qui suit donnée à tire explicatif et nullement limitatif. Cette description se référe à des dessins annexés, sur lesquels :
- les figures 1a à 1f, déjà décrites et relatives à l'art antérieur, représentent schématiquement les étapes de largage d'une seconde charge utile succédant au largage d'une première charge,
- la figure 2 représente schématiquement un dispositif pour la mise en oeuvre du procédé conforme à l'invention,
- la figure 3 représente schématiquement le passage d'un repère fixe à un repère mobile par trois rotations successives repérées par les angles d'Euler.

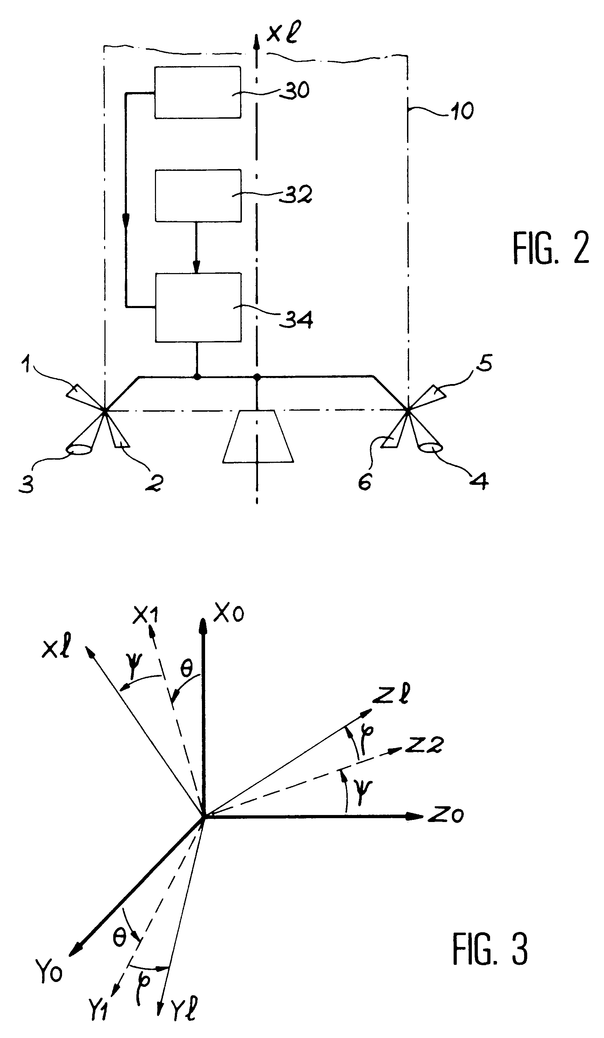

En référence à la figure 2, on décrit maintenant un dispositif contenu dans l'étage supérieur 10 du lanceur et qui permet la mise en oeuvre du procédé conforme à l'invention.

Le dispositif comprend au moins une mémoire 30 et une centrale inertielle 32, toutes deux connectées à un calculateur 34.

Préalablement au lancement, on enregistre dans la mémoire 30 les positions successives de largage des charges utiles et toute autre position que l'engin doit prendre. Ces positions sont repérées par rapport à un repère fixe de référence. Mise à part la vitesse de précession qui est fixée et connue, les vitesses de tangage et de lacet de l'engin en position de largage sont préférentiellement choisies nulles pour une meilleure stabilité lors du largage des charges utiles.

On enregistre aussi tous les couples moteurs pouvant être fournis par les moyens de déplacement de l'étage supérieur 10, i.e. les tuyères latérales référencées de 1 à 6.

Les tuyères 1 à 6 sont généralement identiques et sont donc caractérisées par un MIB unique qui est lui aussi enregistré en mémoire 30.

D'autres informations, tels les paramètres inertiels de l'ensemble formé par l'étage supérieur 10 et les charges utiles sont aussi contenues en mémoire 30.

Lors du vol, une fois arrivé sur son orbite de largage, l'étage supérieur 10 est doté d'un mouvement de précession autour de son axe longitudinal de vitesse égale par exemple à 5 t/mn par mise en action des jeux adéquats de tuyères latérales.

Conformément à l'invention, la mise en position de largage d'une charge utile débute avec la mise en précession. Le pilotage est effectué usuellement pas à pas.

Selon l'invention, pour amener l'axe longitudinal de l'étage supérieur 10 de sa position de mise en précession à la position de largage d'une charge utile, à chaque pas de pilotage, l'étage supérieur 10 est doté d'une vitesse angulaire de basculement asservie sur l'écart entre la position à atteindre et la position de l'engin à la fin de la durée du pas de pilotage précédent, cette vitesse dépendant de la vitesse angulaire de l'engin au pas de pilotage précédent.

A chaque pas de pilotage, la centrale inertielle 32 mesure la vitesse angulaire dans un repère lié au lanceur et la position de l'étage supérieur 10 par rapport à un repère fixe de référence (repère absolu ou inertiel).

La figure 3 représente schématiquement le repère de référence X0, Y0, Z0 et un repère Xℓ, Yℓ, Zℓ attaché à l'engin et précise les angles d'Euler permettant le passage de l'un à l'autre par trois rotations successives.

La première rotation d'un angle ϑ, dit de nutation, autour de l'axe Z0 fait passer les axes X0 et Y0 à des axes intermédiaires X1 et Y1 respectivement.

La seconde rotation d'un angle ψ, dit de précession, autour de l'axe Y1 fait passer les axes X1 et Z0 à des axes X1 et Z2 respectivement.

La troisième rotation d'un angle φ, dit de rotation propre, autour de l'axe Xℓ fait passer les axes intermédiaires Y1 et Z2 à des axes Yℓ et Zℓ respectivement.

En supposant que Xℓ est l'axe longitudinal de l'étage supérieur 10 autour duquel s'effectue le mouvement de précession, les axes Yℓ, Zℓ définissent un plan dit de tangage-lacet.

De nouveau en référence à la figure 2, à partir de la mesure de la vitesse angulaire et de la position, le calculateur 34 détermine une vitesse transverse (c'est-à-dire n'ayant que des composantes dans le plan de tangage-lacet de l'étage supérieur 10) nécessaire pour atteindre la position que doit prendre l'étage supérieur 10 pendant la durée du pas de pilotage. Cette vitesse nécessaire est théorique, elle ne peut le plus souvent qu'être approchée par les jeux de tuyères qui n'engendrent que des valeurs discrètes de vitesse.

La vitesse transverse nécessaire est obtenue par intégration de la vitesse de dépointage, dérivée de l'angle de dépointage qui est égal à la composition complexe conjuguée des angles ϑ et ψ. Cette intégration est effectuée en supposant les angles ϑ et ψ petits, c'est-à-dire par exemple inférieurs à 10°.

Ce calcul est effectué une fois pour toutes en fixant une durée théorique de parcours entre la position mesurée et la position à atteindre par l'engin. Au cas où chaque vitesse théorique nécessaire, calculée à chaque pas de pilotage, peut-être engendrée par les jeux de tuyères, alors l'engin atteint sa position d'arrivée en cette durée ; sinon le parcours est toujours plus long.

Cette durée théorique est déterminée en considérant les caractéristiques (puissance, consommation) des tuyères.

Pour chaque couple moteur enregistré, le calculateur 34 simule des poussées pendant un temps d'action variant selon un nombre croissant d'incréments temporels.

Selon les cas, les incréments temporels ne sont pas tous égaux. Si la tuyère (ou le jeu de tuyères) mise en action pour obtenir la poussée désirée est préalablement au repos, le premier incrément temporel testé est déduit du MIB. Si par contre, la tuyére (ou le jeu de tuyères) est déjà en action, les incréments temporels sont choisis égaux entre eux et les plus faibles possibles.

Ce nombre d'incréments temporels est limité par la durée d'un pas de pilotage puisque ce calcul est destiné à déterminer quelle tuyère (ou jeux de tuyéres) doit être actionnée pour obtenir une vitesse la plus proche de la vitesse transverse nécessaire.

Pour chaque couple (poussée-temps d'action), le calculateur 34 compare la vitesse transverse résultant de ce couple à la vitesse transverse nécessaire.

Le couple moteur et le temps d'action qui permettent d'approcher au plus près la vitesse tranverse nécessaire sont retenus par le calculateur 34.

Le calculateur 34 commande ensuite l'ouverture de la tuyère (ou du jeu de tuyères) pendant le temps d'action déterminé de manière à fournir le couple moteur sélectionné.

Cette suite d'opérations est effectuée pas de pilotage après pas de pilotage jusqu'à ce que la position de largage soit atteinte.

On réitère le procédé pour chaque charge utile à larguer.

Nous avons vu que la vitesse transverse nécessaire était calculée en faisant l'hypothèse que les angles à parcourir pour atteindre la position de largage à partir de la position de l'engin étaient petits. Lorsque l'écart entre la position à atteindre et la position de l'engin est supérieur à un seuil fixé préalablement, la vitesse angulaire (et plus particulièrement transverse) est asservie sur un écart maximum déterminé dépendant de ce seuil. Cet écrétage permet de respecter constamment les hypothèses de calcul (petits angles) et d'éviter la demande par le calculateur de puissances trop importantes pour les tuyères, ce qui entraînerait des dépassements de leur capacité ou des consommations énergétiques trop importantes.

Cet écrétage permet ainsi d'effectuer, avec le procédé de pilotage, des basculements de grand angle de l'axe longitudinal Xℓ. En effet, si une rotation de grande amplitude est nécessaire pour atteindre la position visée, on calcule, à chaque pas de pilotage, une position intermédiaire à atteindre dont l'écart avec la position courante est inférieur au seuil fixé préalablement. Ces positions intermédiaires tendent avec le temps vers la position visée finale.

Le procédé selon l'invention permet aussi d'assurer la précision de mise à poste de charges utiles même en présence de couples perturbateurs ou de balourd dynamique de l'ensemble formé par l'étage supérieur d'un lanceur et de sa charge utile. Le balourd ainsi que les couples perturbateurs peuvent être estimés de façon connue par un filtre de Kalman, par exemple, et sont pris en compte par le pilote pour le calcul des commandes.

Le procédé de pilotage conforme à l'invention et le dispositif pour sa mise en oeuvre permettent de diriger non seulement un engin doté d'un mouvement de précession mais aussi un engin stabilisé selon ses trois axes (dépourvu de mouvement de précession). Il suffit pour cela de faire tendre la vitesse de précession vers zéro dans le calcul de la vitesse transverse nécessaire.

Ainsi, un engin muni de ce procédé et du dispositif pour sa mise en oeuvre ne nécessite qu'un pilote unique pour le positionner qu'il soit doté d'un mouvement de précession ou non.

## Revendications

1. Procédé de pilotage d'un engin spatial doté d'un mouvement de précession autour de son axe longitudinal, l'engin étant muni de moyens de déplacement (1, 2, 3, 4, 5, 6), le pilotage étant effectué pas à pas, caractérisé en ce que, pour amener l'axe longitudinal de l'engin (10) d'une orientation initiale à une autre orientation prédéfinie à atteindre, ces orientations étant repérées par rapport à un repère inertiel de référence (X0, Y0, Z0), sans arrêter le spin, et en présence de couples gyroscopiques, de balourd dynamique et de couples perturbateurs, à chaque pas de pilotage, l'engin (10) est doté d'une vitesse angulaire asservie sur l'écart entre l'orientation de l'axe longitudinal à atteindre et l'orientation de l'engin à la fin du pas de pilotage précédent, et dépendant de la vitesse angulaire de l'engin au pas de pilotage précédent.

2. Procédé de pilotage selon la revendication 1, caractérisé en ce qu'il consiste à :
A- préalablement, enregistrer des positions angulaires reprérées par rapport à un repère inertiel de référence (X0, Y0, Z0) et que l'engin (10) doit prendre, des couples moteurs que les moyens de déplacement (1, 2, 3, 4, 5, 6) peuvent fournir, et au moins un bit d'impulsion minimum correspondant à ces moyens de déplacement,
B- pour chaque position angulaire à atteindre, et pour chaque pas de pilotage,
a) mesurer la vitesse angulaire de l'engin (10) et sa position angulaire par rapport au repére de référence (X0, Y0, Z0),
b) déterminer à partir de la vitesse angulaire et de la position angulaire mesurées une vitesse transverse nécessaire à la fin du pas pour atteindre en un temps fixé prédéterminé la position que doit prendre l'engin (10),
c) sélectionner un couple moteur parmi les couples moteurs enregistrés et déterminer un temps d'action, ce couple moteur sélectionné et le temps d'action déterminé permettant d'approcher au plus près la vitesse transverse nécessaire,
d) pendant le temps d'action déterminé actionner les moyens de déplacement (1, 2, 3, 4, 5, 6) aptes à fournir le couple moteur sélectionné,
C- tant que la position angulaire que l'engin (10) doit prendre n'est pas atteinte, recommencer en B-a).

3. Procédé selon la revendication 2, caractérisé en ce que, pour la sélection du couple moteur et la détermination du temps d'action,
pour chaque couple moteur enregistré, on simule des poussées pendant un temps d'action variant selon un nombre croissant d'incréments temporels, ce nombre étant limité par la durée d'un pas de pilotage,
pour chaque poussée et chaque temps d'action, on compare la vitesse transverse résultant de cette poussée et de ce temps d'action à la vitesse transverse nécessaire,
on sélectionne le couple moteur et le temps d'action qui permettent d'approcher au plus près la vitesse transverse nécessaire.

4. Procédé selon la revendication 3, caractérisé en ce que, les moyens de déplacement (1, 2, 3, 4, 5, 6) étant au repos, le premier incrément temporel est égal à une durée déterminée par un bit d'impulsion minimum enregistré correspondant aux moyens de déplacement permettant de fournir le couple moteur sélectionné.

5. Procédé selon la revendication 1, caractérisé en ce que la position angulaire que doit prendre l'engin (10)est atteinte en une durée au moins égale à une durée fixée.

6. Procédé de pilotage selon la revendication 1, caractérisé en ce que, lorsque l'écart entre la position angulaire à atteindre et la position angulaire de l'engin (10) est supérieure à un seuil, la vitesse angulaire est asservie sur un écart maximum déterminé.

7. Dispositif pour la mise en oeuvre du procédé de pilotage d'un engin spatial doté d'un mouvement de précession conforme à la revendication 1, comprenant :
- des moyens d'enregistrement (30) apte à enregistrer au moins des positions angulaires repérées par rapport à un repère fixe (X0, Y0, Z0) de référence et que l'engin (10) doit prendre, des couples moteurs que des moyens de déplacement (1, 2, 3, 4, 5, 6) attachés à l'engin (10) peuvent fournir et des bits d'impulsion minimum correspondant à ces moyens de déplacement,
- une centrale inertielle (32) apte à mesurer, à chaque pas de pilotage, une vitesse angulaire et une position angulaire par rapport à un repère de référence,
- des moyens (34) de commande pour actionner pendant le temps d'action déterminé des moyens de déplacement aptes à fournir le couple moteur sélectionné,
caracterisé en ce qu'il comprend:
- des moyens (34) pour déterminer à partir de la vitesse angulaire et de la position angulaire mesurées, à chaque pas de pilotage, une vitesse transverse nécessaire pendant la durée du pas pour atteindre une position angulaire que doit prendre l'engin,
- des moyens (34) pour sélectionner, à chaque pas de pilotage un couple moteur parmi les couples moteurs enregistrés,
- des moyens (34) pour déterminer à chaque pas de pilotage un temps d'action de ce couple moteur sélectionné permettant d'approcher au plus près la vitesse transverse nécessaire.

## Claims

1. Process for the control of a space craft having a precession movement about its longitudinal axis, the craft being provided with displacement means (1, 2, 3, 4, 5, 6), the control taking place stepwise, characterized in that, for bringing the craft (10) from an initial orientation to another predetermined orientation to be reached, said orientations being referenced with respect to an inertial reference frame (X0, Y0, Z0) for each control step, without stopping the spin and in the presence of gyroscopic torques, dynamic unbalance and interfering torques the craft (10) has an angular velocity dependent on the variation between the orientation of the longitudinal axis to be reached and the orientation of the craft at the end of the preceding control step and dependent on the angular velocity of the craft at the preceding control step.

2. Control process according to claim 1, characterized in that it comprises:
A. beforehand, recording referenced angular positions with respect to an inertial reference frame (X0, Y0, Z0) and which must be taken by the craft (10), driving torques which can be supplied by the displacement means (1, 2, 3, 4, 5, 6) and at least one minimum impulsion bit corresponding to said displacement means,
B. for each angular position to be reached and for each control step,
a) measuring the angular velocity of the craft (10) and its angular position relative to the reference frame (X0, Y0, Z0),
b) determining on the basis of the angular velocity and the measured angular position a transverse velocity necessary at the end of the step for reaching in a predetermined fixed time the position which has to be assumed by the craft (10),
c) selecting one driving torque from among the driving torques recorded and determining an action time, said selected driving torque and said predetermined action time making it possible to approach as close as possible the necessary transverse velocity,
d) during the predetermined action time the operation of the displacement means (1, 2, 3, 4, 5, 6) able to supply the selected driving torque,
C. if the angular position to be taken by the craft (10) is not reached, recommence at B-a).

3. Process according to claim 2, characterized in that the selection of the driving torque and the determination of the action time, for each recorded driving torque, simulation takes place of the thrusts during an action time varying in accordance with a rising number of time increments, said number being limited by the duration of one control step, for each thrust and each action time, comparison takes place of the transverse velocity resulting from said thrust and said action time and the necessary transverse velocity and the driving torque and action time permitting the closest approach to the necessary transverse velocity are selected.

4. Process according to claim 3, characterized in that with the displacement means (1, 2, 3, 4, 5, 6) in the inoperative position, the first time increment is equal to a time determined by a minimum impulsion bit in recorded from corresponding to the displacement means making it possible to supply the selected driving torque.

5. Process according to claim 1, characterized in that the angular position which must be assumed by the craft (10) is reached in a time at least equal to a fixed time.

6. Control process according to claim 1, characterized in that when the variation between the angular position to be reached and the angular position of the craft (10) exceeds a threshold, the angular velocity is dependent on a predetermined maximum variation.

7. Apparatus for performing the control process for a space craft performing a precession movement according to claim 1, comprising:
recording means (30) able to record at least angular positions referenced with respect to a fixed reference frame (X0, Y0, Z0) and which the craft (10) must assume, driving torques which the displacement means (1, 2, 3, 4, 5, 6) attached to the craft (10) can supply and minimum impulsion bits corresponding to said displacement means,
an inertia station (32) able to measure, for each control step, an angular velocity and an angular position relative to a frame of reference,
control means (34) for operation during the predetermined action time of the displacement means able to supply the selected driving torque,
characterized in that it comprises:
means (34) for determining on the basis of the measured angular position and angular velocity, for each control step, a transverse velocity which is necessary for the duration of the step in order to reach an angular position which is to be assumed by the craft,
means (34) for selecting, for each control step, one driving torque from among the recorded driving torques,
means (34) for determining, for each control step, an action time of said selected driving torque making it possible to obtain the best approach to the necessary transverse velocity.

## Patentansprüche

1. Verfahren zur Steuerung eines Raumfahrzeugs, versehen mit einer Präzessionsbewegung um seine Längsachse, wobei das Fahrzeug mit Fortbewegungseinrichtungen (1, 2, 3, 4, 5) ausgestattet ist und die Steuerung schrittweise ausgeführt wird, **dadurch gekennzeichnet** daß, um die Längsachse des Fahrzeugs (10) aus einer Anfangsorientierung in eine zu erreichende andere, vorbestimmte Orientierung zu bringen, diese Orientierungen festgelegt werden bezüglich eines Trägheits-Referenzbezugssystems (X0, Y0, Z0), ohne den Spin anzuhalten, und bei Vorhandensein von Dreh- bzw. Kreiselmomenten, von dynamischer Unwucht und von Störmomenten, bei jedem Steuerschritt, dem Fahrzeug (10) eine Winkelgeschwindigkeit verliehen wird, geregelt auf Grund der Differenz zwischen der zu erreichenden Orientierung der Längsachse und der Orientierung des Fahrzeugs am Ende des vorhergehenden Steuerschritts, und abhängig von der Winkelgeschwindigkeit des Fahrzeugs beim vorhergehenden Steuerschritt.

2. Steuerungsverfahren nach Anspruch 1, dadurch gekennzeichnet, daß es darin besteht:
A- vorher Winkelpositionen zu speichern, festgelegt bezüglich eines Trägheits-Referenzbezugssystems (X0, Y0 Z0), die das Fahrzeug (10) einnehmen soll, sowie Antriebsmomente, die die Fortbewegungseinrichtungen (1, 2, 3, 4, 5, 6) liefern können, und wenigstens ein Minimalimpulsbit bzw. MIB (bit d'impulsion minimum), diesen Fortbewegungseinrichtungen entsprechend,
B- für jede zu erreichende Winkelposition und für jeden Steuerschritt,
a) die Winkelgeschwindigkeit des Fahrzeugs (10) zu messen und seine Winkelposition, bezogen auf das Referenzbezugssystem (X0, Y0, Z0),
b) aufgrund der gemessenen Winkelgeschwindigkeit und Winkelposition eine am Ende des Schritts erforderliche Quergeschwindigkeit festzulegen, um zu einem vorbestimmten, festen Zeitpunkt die Position zu erreichen, die das Fahrzeug (10) einnehmen soll,
c) aus den gespeicherten Antriebsmomenten ein Antriebsmoment auszuwählen und eine Wirkungszeit festzulegen, wobei dieses ausgewählte Antriebsmoment und die festgelegte Wirkungszeit ermöglichen, sich der erforderlichen Quergeschwindigkeit so weit wie möglich anzunähern,
d) während der festgelegten Wirkungszeit die Fortbewegungseinrichtungen (1, 2, 3, 4, 5, 6) zu betätigen die das gewählte Antriebsmoment liefern,
C- wieder bei B-a) zu beginnen, solange die Winkelposition nicht erreicht ist, die das Fahrzeug (10) einnehmen soll.

3. Verfahren nach Anspruch 2, dadurch gekennzeichnet, daß man, was die Wahl des Antriebmoments und die Festlegung der Wirkungszeit betrifft,
für jedes gespeicherte Antriebsmoment, Schübe simuliert während einer Wirkungszeit, die entsprechend einer zunehmenden Anzahl von Zeitinkrementen variiert, wobei diese Anzahl begrenzt ist durch die Dauer eines Steuerschritts,
für jeden Schub und jede Wirkungszeit die aus diesem Schub und aus dieser Wirkungszeit resultierende Quergeschwindigkeit vergleicht mit der erforderlichen Quergeschwindigkeit,
das Antriebsmoment und die Wirkungszeit wählt, die ermöglichen, sich der erfordlichen Quergeschwindigkeit so weit wie möglich anzunähern.

4. Verfahren nach Anspruch 3, dadurch gekennzeichnet, wobei die Fortbewegungseinrichtungen (1, 2, 3, 4, 5, 6) im Ruhezustand sind, daß das erste Zeitinkrement gleich einer Dauer ist, die bestimmt wird durch ein den Fortbewegungseinrichtungen entsprechendes gespeichertes Minimalimpulsbit bzw. MIB, das ermöglicht, das gewählte Antriebsmoment zu liefern.

5. Verfahren nach Anspruch 1, dadurch gekennzeichnet, daß die Winkelposition, die das Fahrzeug (10) einnehmen soll, zumindest in einem Zeitraum erreicht wird, der einem festgelegten Zeitraum entspricht.

6. Steuerungsverfahren nach Anspruch 1, dadurch gekennzeichnet, daß, wenn die Differenz zwischen der zu erreichenden Winkelposition und der Winkelposition des Fahrzeugs (10) größer ist als ein Schwellenwert, die Winkelgeschwindigkeit auf Grund einer festgelegten Maximaldifferenz geregelt wird.

7. Vorrichtung für die Anwendung des Steuerungsverfahrens eines Raumfahrzeugs, versehen mit einer Präzessionsbewegung, dem Anspruch 1 entsprechend, umfassend:
- Speichereinrichtungen (30), geeignet wenigstens Winkelpositionen zu speichern, festgelegt bezüglich eines festen Referenzbezugssystems (X0, Y0, Z0), die das Fahrzeug (10) einnehmen soll, sowie Antriebsmomente, die die an dem Fahrzeug befestigten Fortbewegungeinrichtungen (1, 2, 3, 4, 5, 6) liefern können, und Minimalimpulsbits bzw. MIB, diesen Fortbewegungeinrichtungen entsprechend,
- ein Trägheitsnavigations-Leitwerk (32), geeignet bei jedem Steuerschritt eine Winkelgeschwindigkeit und eine Winkelposition bezüglich eines Referenzbezugssystems zu messen,
- Steuereinrichtungen (34), um während der festgelegten Wirkungszeit Fortbewegungseinrichtungen zu betätigen, die fähig sind, das gewählte Antriebsmoment zu liefern,
**dadurch gekennzeichnet**, daß sie umfaßt:
- Einrichtungen (34), um auf Grund der gemessenen Winkelgeschwindigkeit und Winkelposition für jeden Steuerschritt eine Quergeschwindigkeit festzulegen, die erforderlich ist während der Schrittdauer, um eine Winkelposition zu erreichen, die das Fahrzeug einnehmen soll,
- Einrichtungen (34), um für jeden Steuerschritt ein Antriebsmoment auszuwählen aus den gespeicherten Antriebsmomenten,
- Einrichtungen (34), um für jeden Steuerschritt eine Wirkungszeit dieses gewählten Antriebsmoments festzulegen, um der erforderlichen Quergeschwindigkeit so nahe wie möglich zu kommen.
